Europäisches Patentamt

(19) European Patent Office

Office européen des brevets

(11) Publication number: **0 071 321**
**A1**

# EUROPEAN PATENT APPLICATION

(21) Application number: 82300654.9

(22) Date of filing: 10.02.82

(51) Int. Cl.³: **E 05 F 15/16**

(30) Priority: 27.07.81 US 287137

(43) Date of publication of application:
09.02.83 Bulletin 83/6

(84) Designated Contracting States:
AT BE CH DE FR GB IT LI LU NL SE

(71) Applicant: CHAMBERLAIN MANUFACTURING
CORPORATION
845 Larch Avenue
Elmhurst Illinois 60126(US)

(72) Inventor: Iha, Kiyoshi
26 Lancaster Avenue
Elk Grove Village Illinois 60007(US)

(74) Representative: Oliver, Roy Edward et al,
POLLAK,MERCER & TENCH High Holborn House 52-54
High Holborn
London WC1V 6RY(GB)

(54) Tape drive assembly for a garage door opener.

(57) The assembly has a rail (14) formed with two slot-shaped openings into which a plastics tape (42) can be received at one end thereof, such that a sprocket (41) can drive the tape (42) from one slot into the other slot, thus driving a trolley (19) carrying the garage door (10). The trolley (19) can be disconnected from the tape (42), so as to allow manual operation of the door (10), the tape (42) preferably being formed of a perforated elastomeric material, so as to transmit power under compression or pushing as well as under tension for pulling the door (10) between respective open and closed positions.

FIG.1

FIG.2

TAPE DRIVE ASSEMBLY FOR GARAGE DOOR OPENER

DESCRIPTION

This invention relates in general to garage door openers and particularly to a perforated elastometric tape which is used for transmitting power to the garage door opener.

The prior art garage door openers use sprocket gear driven chains or screw driven gear racks for transmitting power raising and lowering the garage door. Such energy transmitting means have the following inherent disadvantages. The rising cost of energy has increased the manufacturing cost of such devices; the power transmission mechanisms are noisy when operating; and within the cost limitations required by the state of the art the opportunity to improve the appearance of the garage door opener is limited.

It is the purpose of the present invention to provide a simplified and economical garage door opener assembly which incorporates a sprocket driven tape for transmitting energy.

It is also an object of the invention to transmit power under compression by pushing and under tension by pulling utilizing elastometric punch tape which is driven by a sprocket and is guided through slots formed in an enclosed rail.

Another object of the invention is to utilize the partially enclosed top slot of the rail for takeup tape storage.

Yet another object of the invention is to provide a relatively vibration free and relatively silent running garage door opener which is dependable and smooth in operation.

Other objects, features and advantages of the invention will be readily apparent from the following description of certain preferred embodiments thereof taken in conjunction with the accompanying drawings although variations and modifications may be effected without departing from the spirit and scope of the novel concepts of the disclosure and in which:

Figure 1 is a perspective view of the garage door opener of the invention;

Figure 2 is a side sectional view illustrating the invention;

Figure 3 is an exploded view illustrating the arrangement between the rail and the housing;

Figure 4 is a top sectional view illustrating the invention;

Figure 5 is a front sectional view illustrating the invention;

Figure 6 is a front sectional view of the invention;

Figure 7 is a sectional view through the rail;

Figure 8 is a sectional view through the trolley and the rail;

Figure 9 is a side broken-away sectional view of the trolley;

Figure 10 is an exploded view illustrating the tape and the trolley locking coupler; and

Figure 11 is a simplified schematic diagram for driving the reversible motor of the garage door opener.

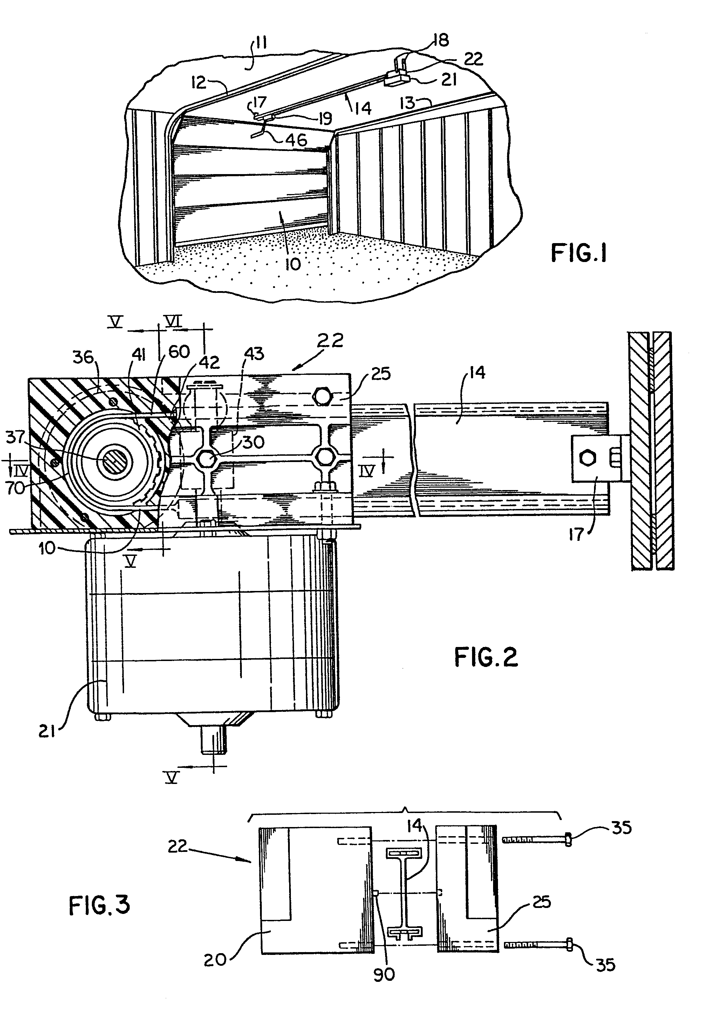

Figure 1 illustrates a garage door 10 which is controlled by the garage door opener of the invention. The door 10 has rollers at either end that run in guide rails 12 and 13. An arm 46 has one end connected to the door 10 and the other end is connected to a trolley 19 of the garage door opener which runs on a rail 14. The rail has one end adjacent the door mounted by a bracket 17 and the other end of the rail is connected to a housing 22 to which a motor 21 is mounted.  Straps 18 connect the housing and rear end of the rail 14 to the ceiling 11.

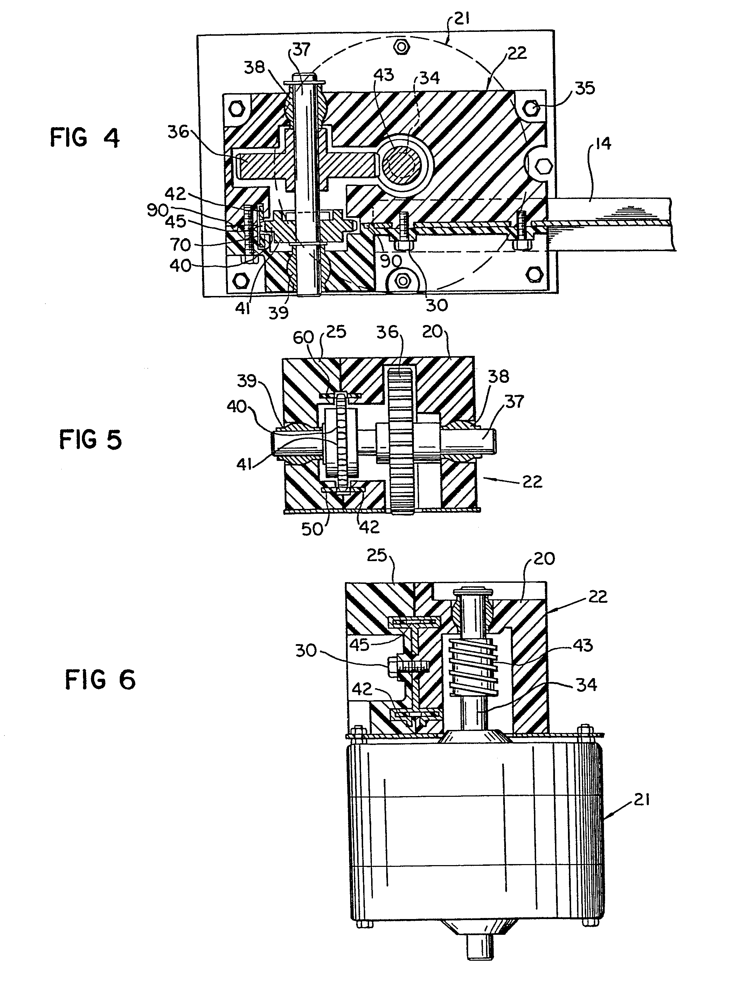

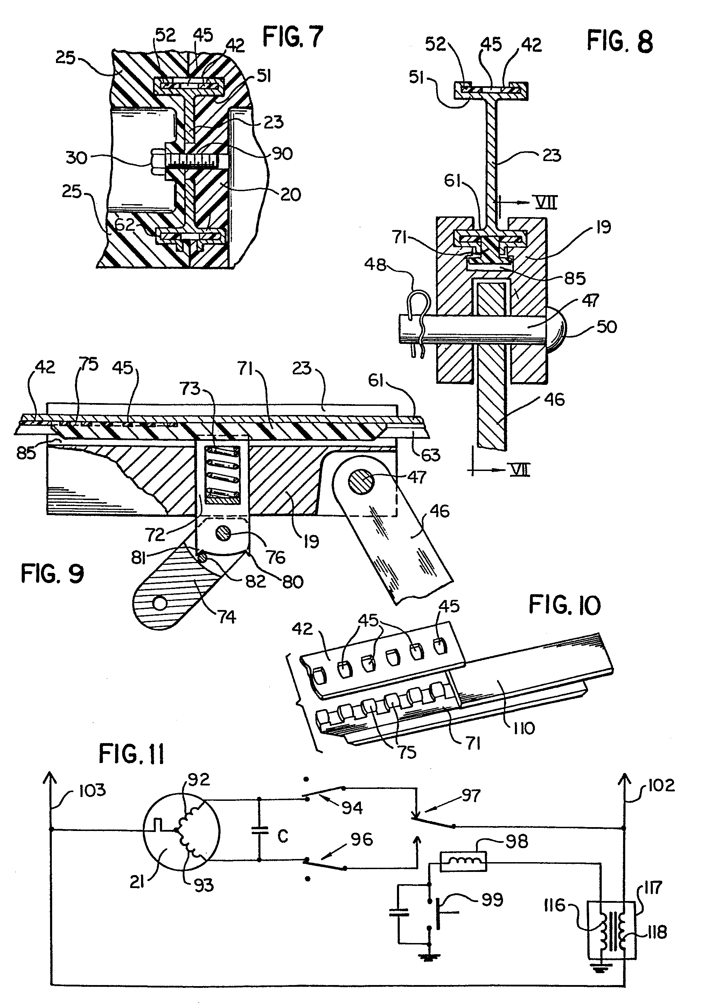

As shown in Figures 2 through 6, the motor 21 has a shaft 34 which extends into the housing 22 and carries a worm 43 that engages a helical or worm gear 36 that is mounted on a shaft 37 carried by a housing 22 by bearings 38 and 39.  A sprocket 41 is carried on shaft 37 and has teeth 40 that engage openings 45 in a perforated elastometric tape 42 so as to drive it.  The housing 22 is formed with two parts 20 and 25 as shown in Figure 6 which are held together by a suitable bolts 30, 35 to join the two halves and support the bearings, shafts, and mechanisms contained in openings formed in the housing 22.  As shown in Figure 2, the tape 42 passes around the sprocket 41 and rides in a groove 70 which has a lower end 10 and an upper end 60.  As shown in Figures 2 through 7, one end of the rail 14 extends into the housing 22 between portions 20 and 25 and bosses 90 which extend from portion 20 pass through openings formed in the web 23 of the rail and the bolts 30 pass through the bosses 90 so as to lock the rail to the portions 20 and 25.  The detail view of Figure 7 illustrates the boss 90 extending through an opening in the web 23 of the rail with the bolt 30 extending through the boss and rail to lock the rail to the housing 22.  Enlarged portions 51 and 61 are formed at opposite ends of the web 23 and the enlarged portion 51 is formed with a slot 52 into which one end of the tape 42 is received. The enlarged portion 61 is also formed with a slot 63 into which the tape is received.  The slots 52 and 63 each have their outer surfaces open as illustrated in Figures 7 and 8 for example.

A trolley 19 is formed with an opening 85 which fits over the lower portion 61 of the rail 14 so that the trolley can move along the rail. A moving latching coupler 71 is biased by a spring 73 against the tape 42 and has teeth 75 which mate and lock with the openings 45 in the end of the tape 42 so as to lock the trolley 19 to the tape. As shown in Figure 10, a flat portion 110 is attached to the coupler 71 adjacent the teeth 75 and serves as a guide in the slot 63 of the enlarged portion 61 so as to guide the coupler through the slot.

A latch 72 is mounted in a slot of the trolley illustrated in Figure 9 and is spring biased by a spring 73 against the coupler to hold the teeth of the coupler 71 in the openings 45 of the tape 42. A latch release lever 74 is pivotally connected to the latch 72 by a shaft 76 and has a pin 82 which engages stops 80 and 81 on the latch 72 to limit the pivotal motion of the lever 74. By pivoting the lever 74 to the right relative to Figure 9, the latch 72 can be locked in the down position such that the coupler teeth 75 are out of engagement with the openings 45 in the tape 42. By pulling down on the latch release lever 74, the latch will be moved downwardly relative to Figure 9 thus moving the coupler downwardly in the slot 85 so that the teeth are disengaged from the openings 45 of the tape so that the trolley 19 can be freely moved along the bottom portion 61 of the rail 14. The garage door drive arm 46 is pivotally connected to the trolley with the bolt 47 that has a head 50 and is secured by a cotter pin 48 as illustrated in Figure 8.

Figure 11 is a simplified schematic diagram of the electrical circuit for driving the motor 21. Power is applied to leads 102 and 103 and lead 103 is connected to first ends of motor windings 92 and 93. A capacitor C1

is connected across the other ends of the windings 92 and 93. An uplimit switch 94 is connected to winding 92 and through an operating switch 97 to power line 102. A down limit switch 96 is connected to winding 93 and to the open terminal of the operating switch 97. A start switch 99 closes a circuit from ground through a relay 117 that controls the movable contact of operating switch 97 and has its other side connected to the secondary 116 of a transformer which has its primary 118 connected between power lines 102 and 103. The circuit can comprise any reversible motor drive circuitry for a garage door opener so as to drive the garage door motor clockwise or counterclockwise so as to open and close the garage door. The uplimit switch may be mounted on the rail 14 where it will be engaged by the trolley 19 so as to stop the motor 21 when the door is in the up position. The down limit switch may be operated by a member attached to the end of the tape 42.

As shown in Figure 10, the perforations 45 have a pitch and size so that they mate with the teeth 75 of the coupler 71 of the trolley. Relative to Figure 2, counterclockwise rotation of the sprocket 41 will effect the linear motion of the tape and trolley toward the right relative to the Figure which will move the garage door in the down direction. When the motor 21 drives the sprocket 41 in the clockwise direction relative to Figure 2, the trolley will be moved to the left relative to the Figure and the garage door will be opened.

The ability of the tape to transmit a pushing force to the trolley is due to the rail design. The tape is enclosed in the rail channels 52 and 63 with very small clearance so that the undesirable effect of buckling will be minimized. The slot 70 with ends 10 and 60 also guide the tapes so that it cannot buckle. The slot 85 in the lower surface of the rail allows the coupling of the tape to the trolley by the coupler 71.

When the sprocket 41 is being driven in the clockwise direction, the tape 42 will be in tension between the drive sprocket 41 and the trolley, thus, opening the garage door.

Configuration of the housing and the periphery of the sprocket is such that the tape peels off and is fed tangentially from the sprocket into the upper rail enclosure 61 and the tape end will be pushed into the opening 52 as the sprocket is driven counterclockwise.

It is to be realized that the tape 42 has a first end which engages and is locked to the trolley 19 during operation and that the end 42 of the tape which is received in the upper portion 51 of the rail does not extend for the full length of the slot when the garage door is completely closed. However, at least a portion of the tape 42 extends into the opening 52 of the upper member 51 of the rail so that the rail will guide and enclose the tape 42 as the trolley 19 moves to the left relative to Figure 2 as the garage door is opened.

The tape for the invention may be Dymetrol available from DuPont and has the following characteristics.

TYPICAL PROPERTIES
DYMETROL EPS 2000 PUNCHED TAPE
(OVAL HOLES)

| Tape Property | Units | Typical Value | Test Conditions |
|---|---|---|---|
| Width | mm | 15.2 ± .2 | 23°C, 50% RH |
| Thickness | mm | 1.8 ± .05 | 23°C, 50% RH |
| Hole Width | mm | 6.0 ± .1 | 23°C, 50% RH |
| Hold Length | mm | 3.8 ± .1 | 23°C, 50% RH |
| Pitch | mm | 8.1 ± .05 | 23°C, 50% RH |
| Shrinkage | % | 6 max. | 1 hour, 150%C |
| Web Breakload | Newtons | 1550 min. | 1) See explanation |
| Elongation to Break | % | 24 ± 4 | 23°C, 50% RH |
| Tensile Modulus @ 7% Elongation | Newtons | 135 min. | 23°C, 50% RH |

1. Web breakload is a measure of the tensile load which causes failure of the web material between the holes. A sample is fixed on an Instron or other tensile loading device with four holes on each end engaged with test fixture teeth which duplicate the geometry of the holes in the tape. The sample is loaded at a speed of 500mm per minute until the web breaks and the load falls off.

TYPICAL PROPERTIES OF DYMETROL EPS TAPE

| Property | Units | Test Temperature | | | Conditions |
|---|---|---|---|---|---|
| | | -40°C | 23°C | 80°C | |
| Width Range | mm | - | 7 to 25 | - | - |
| Thickness Range | mm | - | 0.4 to 2.0 | - | - |
| Color | | --------------------Natural, Black---------------------------- | | | |
| Tensile Strength | M Pa | - | 207 | - | 50% RH |
| Specific Gravity | - | - | 1.26 | - | ASTM D 1505 |
| Moisture Absorption | % | - | 0.2 | - | 50% RH |
| Moisture Absorption at Saturation | % | - | 0.5 | - | 100% RH |
| Shrinkage | % | --------------------3.0------------------------- | | | 1 hour, 150°C |
| Linear Coefficient of Expansion | per °C | $5.0 \times 10^{-5}$ | $10.0 \times 10^{-5}$ | $4.0 \times 10^{-5}$ | ASTM E 228 |
| Poisson's Ratio | | | | | |
| • Width Direction | - | - | .33 | - | ASTM E 128 |
| • Thickness Direction | - | - | .67 | - | ASTM E 128 |
| Young's Modulus | M Pa | 3900 | 950 | 350 | Modified* ASTM D 638 |
| Tensile Impact Energy | Joules/m² | $1.2 \times 10^{6}$ | $1.4 \times 10^{6}$ | $1.3 \times 10^{6}$ | ASTM D 1822 |
| Shear Modulus | | | | | |
| • Elastic (G') | dynes/cm² | $10 \times 10^{9}$ | $4.3 \times 10^{9}$ | $1.6 \times 10^{9}$ | ASTM D 2236 |
| • Loss (G") | dynes/cm² | $.25 \times 10^{9}$ | $.31 \times 10^{9}$ | $.06 \times 10^{9}$ | ASTM D 2236 |
| • Decrement" | - | .07 | .22 | .11 | ASTM D 2236 |

In a particular model constructed according to the invention, the tape had a width of 20mm and thickness of 2mm and had openings 45 which had a width of 6mm and the length of the openings in a longitudinal direction of the tape was about 4mm. The openings were slightly oval in shape and had a pitch so as to mate with teeth 75 on the coupler 71.

Although the flexible tape disclosed is a plastic tape it is to be realized that any suitable flexible tape made of stainless steel or any other suitable material can be used in this invention.

Although the invention has been described with respect to preferred embodiments, it is not to be so limited as changes and modifications can be made which are within the full intended scope of the invention as defined by the appended claims.

CLAIMS

1. A tape drive assembly for a garage door operator, comprising, a drive motor, a sprocket driven by said drive motor, a flexible tape with sprocket engaging holes driven by said sprocket, a rail with a first portion with a first longitudinal slot having a general shape similar to said tape's cross-section in to which one end of said flexible tape is received, a trolley coupled to a door and movably mounted on said rail and coupled to said one end of said flexible tape so that said tape can drive said trolley in either direction along said rail to open and close said door.

2. A tape drive assembly according to claim 1 wherein said first portion of said rail has a second slot through which a portion of said trolley extends into said first longitudinal slot and connects to said one end of said flexible tape.

3. A tape drive assembly according to claim 2 wherein said portion of said trolley which extends through said second slot includes a coupler member which has teeth for engaging said sprocket engaging holes of said flexible tape.

4. A tape drive assembly according to claim 3 including a latch attached to said trolley and connected to said coupler member and capable of locking or unlocking it to said flexible tape.

5. A tape drive assembly according to claim 4 including a bias spring mounted between said latch and said trolley to bias said latch against said coupler member to lock it to said flexible tape.

6. A tape drive assembly according to claim 3 including a second portion of said rail formed with a third longitudinal slot having a general shape similar to said tape's cross-section into which the second end of said tape extends after it has emerged from said first longitudinal slot and passed over said sprocket.

7. A tape drive assembly according to claim 6 wherein said first and second portions of said rail have their ends closely adjacent and tangentially arranged to said sprocket so that said flexible tape moves over said sprocket between said first and second portions.

8. A tape drive assembly according to claim 7 wherein said tape is rectangular shaped in cross-section and said first and third longitudinal slots are rectangular in cross-section.

9. A tape drive assembly according to claim 8 including electrical circuit means connected to said motor to drive it in either clockwise or counterclockwise direction to open or close the garage door.

10. A tape drive assembly according to claim 1 including storage means for the second end of said tape after it has passed over said sprocket.

11. A tape drive assembly according to claim 1 wherein said flexible tape is made of an elastometric plastic material.

12. A tape drive assembly according to claim 1 wherein said flexible tape is made of metal.

13. A tape drive assembly according to claim 6 comprising a housing to which said drive motor is attached and said sprocket rotatably supported in said housing, said rail extending into said housing and coupled thereto, and a curved slot formed in said housing to guide said flexible tape around said sprocket and into said first and third longitudinal slots.

14. A tape assembly according to claim 13 wherein said housing is formed of two mating portions which said rail fits between.

15. A tape assembly according to claim 14 including holes formed through a central portion of said rail and fastening means extending therethrough and into said two mating portions.

16. A tape assembly according to claim 15 wherein one of said mating portions is formed with bosses which extend through said holes formed in said central portion of said rail.

:

FIG.1

FIG.2

FIG.3

FIG 4

FIG 5

FIG 6

FIG. 7

FIG. 8

FIG. 9

FIG. 10

FIG. 11

# 0071321

European Patent
Office

**EUROPEAN SEARCH REPORT**

Application number

EP 82 30 0654.9

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | <u>GB - A - 1 234 990</u> (G. SMAL)<br>* complete document * | 1-5<br>8-10<br>12,13 | E 05 F 15/16 |
| A | <u>DE - A1 - 3 015 072</u> (HITACHI LTD.)<br>* page 11, line 16 to page 13, 1st paragraph ; fig. 2 to 5 *<br>  &   GB - A - 2 048 368 | 1-5<br>9,10<br>12,13 | |
| A | <u>DE - A1 - 2 938 953</u> (HITACHI LTD.)<br>* complete document * | 1-5<br>9,10<br>12,13 | |

**TECHNICAL FIELDS SEARCHED (Int.Cl. ³)**

E 05 D 15/00

E 05 F 15/00

E 06 B  5/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family,

corresponding document

The present search report has been drawn up for all claims

| Place of search | Date of completion of the search | Examiner |
|---|---|---|
| Berlin | 13-10-1982 | WUNDERLICH |

EPO Form 1503.1 06.78